# EUROPÄISCHE PATENTANMELDUNG

(11) **EP 1 990 883 A1**
(43) Veröffentlichungstag der Anmeldung: **12.11.2008**
(21) Anmeldenummer: 07007364.8
(22) Anmeldetag: 10.04.2007
(51) Int. Cl.: H02H 7/22

(54) **Verfahren und Einrichtung zum Schutz eines elektrischen Schaltgerätes vor einer thermischen Überlast**

(71) Anmelder: SIEMENS AKTIENGESELLSCHAFT, 80333 München (DE)
(72) Erfinder: Pfeifer, Martin, 92245 Kümmersbruck (DE)

(57) **Zusammenfassung**

Bei einem Verfahren und mit einer Einrichtung zum Schutz eines elektrischen Schaltgerätes (2) vor einer thermischen Überlast werden folgende Verfahrensschritte durchgeführt:
a) Erfassen einer Zeitdifferenz (Δt) zwischen einem Ausschaltvorgang (on → off) und dem nächsten, zeitlich darauffolgenden Ausschaltvorgang (on → off),
b) Vergleichen der Zeitdifferenz (Δt) mit einem ersten Zeitgrenzwert (T₁),
c) Hochsetzen eines Zählwertes (n) um ein Inkrement, wenn der erste Zeitgrenzwert (T₁) unterschritten wird,
d) Vergleichen des Zählwertes (n) mit einem Höchstwert (N),
e) Auslösen des Schaltgerätes (2) für eine vorgegebene Zeitdauer (ΔT), wenn der Höchstwert (N) überschritten wird.

## Beschreibung

Die Erfindung bezieht sich auf ein Verfahren und eine Einrichtung zum Schutz eines elektrischen Schaltgerätes vor einer thermischen Überlast.

In der Schaltkammer eines elektrischen Schaltgerätes, beispielsweise eines Schützes oder eines Leistungsschalters, treten beim Abschalten eines betriebsmäßigen Stromes oder eines Überlaststromes Schaltlichtbögen auf, die die Schaltkammer des elektrischen Schaltgerätes thermisch belasten. Ein besonderes Problem stellen Schaltvorgänge dar, die in kurzen zeitlichen Abständen nacheinander auftreten. Die durch die aufeinanderfolgenden Schaltlichtbögen jeweils freigesetzte Wärme führt zu einer thermischen Überlast und zu Schäden, die einen vorzeitigen Austausch des Schaltgerätes erforderlich machen. Falls diese, vor dem eigentlichen Lebensdauerende auftretenden Schäden nicht erkannt werden, können außerdem Folgeschäden, beispielsweise ein Brand im Schaltschrank, auftreten.

Derartige Betriebszustände, bei denen viele Schaltvorgänge in kurzer Folge hintereinander erfolgen, können sowohl bei der Ausdauerprüfung als auch dann auftreten, wenn das Schaltgerät zwar gezielt, aber in sehr kurzen Zeitabständen häufig betätigt wird. Häufig ist auch Ursache für einen derartigen Betriebszustand eine Fehlverdrahtung (sogenanntes Ratterkommando).

Der Erfindung liegt nun die Aufgabe zu Grunde, ein Verfahren zum Schutz eines elektrischen Schaltgerätes anzugeben, mit dem das Auftreten einer thermischen überlast durch in kurzen Zeitabständen aufeinanderfolgende Schaltvorgänge vermieden werden kann. Außerdem liegt der Erfindung die Aufgabe zu Grunde, eine Einrichtung zur Durchführung des Verfahrens anzugeben.

Die genannte Aufgabe wird gemäß der Erfindung gelöst mit einem Verfahren mit den Merkmalen des Patentanspruches 1. Gemäß diesen Merkmalen umfasst das Verfahren folgende Verfahrensschritte:
a) Erfassen einer Zeitdifferenz zwischen einem Ausschaltvorgang und dem nächsten, zeitlich darauffolgenden Ausschaltvorgang,
b) Vergleichen der Zeitdifferenz mit einem ersten Zeitgrenzwert,
c) Hochsetzen eines Zählwertes um ein Inkrement, wenn der erste Zeitgrenzwert unterschritten wird,
d) Vergleichen des Zählwertes mit einem zulässigen Höchstwert,
e) Auslösen des Schaltgerätes für eine vorgegebene Zeitdauer, wenn der Höchstwert überschritten wird.

Durch diese Maßnahmen wird eine schnelle Schaltfolge erkannt und zur Schonung des Schaltgerätes bzw. der Schaltkammer wird eine thermische Überlastauslösung herbeigeführt sowie eine erneute Zuschaltung für eine vorgegebene Zeitdauer verhindert. Dadurch wird die Erwärmung der Schaltkammer begrenzt und es wird das Risiko eines vorzeitigen Ausfalls des Schaltgerätes verringert. Darüber hinaus ist es durch die erfindungemäße Maßnahme möglich, den konstruktiven Aufwand hinsichtlich der thermischen Belastbarkeit der Schaltkammer zu verringern.

Wenn nach dem Auslösen des Schaltgerätes der Zählwert auf einen Zwischenwert gesetzt wird, der größer ist als der Anfangswert, wird eine zusätzliche Sicherheitsreserve geschaffen, da für den Fall, dass unmittelbar nach dem erneuten Zuschalten des Schaltgerätes zeitlich kurz aufeinanderfolgende Ausschaltvorgänge stattfinden, die Überlastauslösung früher erfolgt.

In einer weiteren vorteilhaften Ausgestaltung des Verfahrens wird der Zählwert auf einen Anfangswert zurückgesetzt, wenn die Zeitdifferenz einen zweiten Zeitgrenzwert überschreitet. Überschreitet nämlich die Zeitdifferenz diesen zweiten Zeitgrenzwert, ist dies ein Indiz dafür, dass der fehlerhafte und zu kurzen Zeitabständen zwischen den Schaltvorgängen führende Betriebszustand beendet ist, und das Schaltgerät wieder in seinen normalen Betriebszustand gelangt und dementsprechend die Schaltkammer abgekühlt ist. Ausgehend von einem solchen normalen Betriebszustand ist das Schaltgerät erneut in der Lage, eine größere Zahl von zeitlich kurz aufeinanderfolgenden Schaltvorgängen ohne thermische Schäden zu überstehen.

Hinsichtlich der Einrichtung wird die Aufgabe gemäß der Erfindung gelöst mit einer Einrichtung mit den Merkmalen des Patentanspruchs 4, die eine Steuereinrichtung zum Auslösen des Schaltgerätes umfasst, in die eine Software zum Durchführen eines Verfahrens nach einem der Verfahrensansprüche implementiert ist.

Zur weiteren Erläuterung der Erfindung wird auf das Ausführungsbeispiel der Zeichnung verwiesen. Es zeigen:
- FIG 1: eine Einrichtung gemäß der Erfindung in einem schematischen Prinzipschaltbild,
- FIG 2: ein Flussdiagramm, in dem der Ablauf des Verfahrens gemäß der Erfindung dargestellt ist.

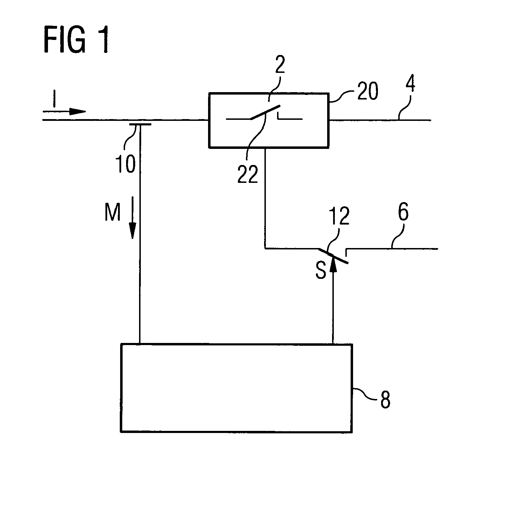

Gemäß FIG 1 ist ein elektrisches Schaltgerät 2 in einem Stromkreis 4 geschaltet. Das elektrische Schaltgerät 2, in der FIG veranschaulicht durch einen in einer Schaltkammer 20 befindlichen geöffneten Lastschalter 22, ist an einen Steuerkreis 6 angeschlossen, mit dem die Schaltkontakte geöffnet oder geschlossen werden können.

Eine Einrichtung 8 gemäß der Erfindung zum Schutz des elektrischen Schaltgerätes 2 vor einer thermischen Überlast umfasst einen Aufnehmer 10 zum Messen des durch das Schaltgerät fließenden Stromes I. Der zugehörige Messwert M wird in der Steuereinrichtung 8 ausgewertet, die abhängig vom Auswerteergebnis ein Steuersignal S generiert, das beispielsweise den Steuerkreis 6 beeinflusst und für den Fall, dass eine thermische Überlast festgestellt wird, eine Überlastauslösung des Schaltgerätes 2 bewirkt und dessen erneutes Einschalten verhindert, wie es nur zur Veranschaulichung durch einen im Steuerkreis 6 befindlichen, durch das Steuersignal S betätigbaren Steuerschalter 12 dargestellt ist.

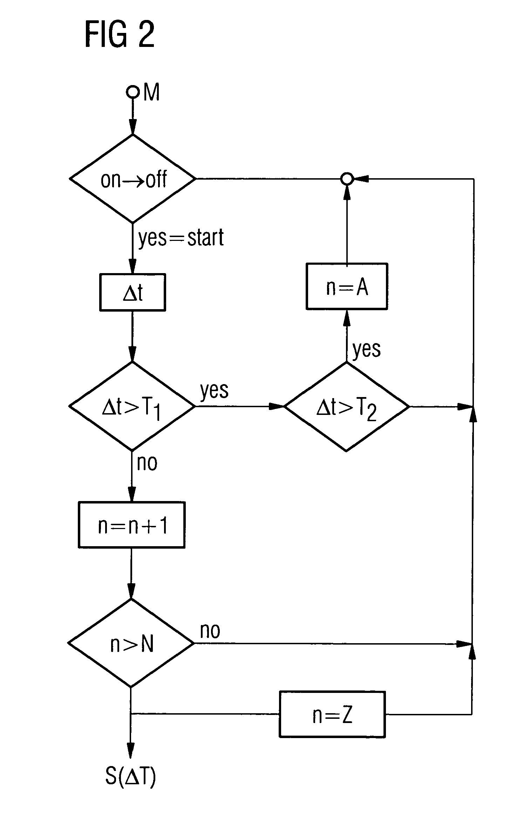

Der in der Steuereinrichtung 8 implementierte Algorithmus zum Überwachen und zum Schutz des elektrischen Schaltgerätes 2 vor einer thermischen Überlast ist in FIG 2 veranschaulicht. In der Steuereinrichtung 8 wird das Messsignal M dahingehend überwacht, ob ein Ausschaltvorgang, in der FIG mit "on → off" dargestellt, auftritt. Ist dies der Fall, wird in einem nächsten Schritt die Zeit gemessen, die vergeht, bis das Messsignal einen nächsten, zeitlich darauffolgenden Ausschaltvorgang ("on → off") anzeigt. Ist dies der Fall ("yes") wird der Zeitzähler gestoppt und auf diese Weise die Zeitdifferenz Δt zwischen dem Ausschaltzeitpunkt und dem Einschaltzeitpunkt bestimmt. In einem nächsten Schritt wird diese Zeitdifferenz Δt mit einem ersten Zeitgrenzwert T₁ verglichen. Ist die Zeitdifferenz Δt größer als dieser erste Zeitgrenzwert erfolgt eine Überprüfung, ob die Zeitdifferenz Δt größer als ein zweiter Zeitgrenzwert T₂ ist. Ist dies der Fall, war die Zeitdifferenz zwischen dem Ausschalt- und dem darauffolgenden Ausschaltvorgang groß genug um eine hinreichende Abkühlung der Schaltkammer des Schaltgerätes zu ermöglichen. In diesem Fall wird ein Zählwert n eines Zählers auf einen Anfangswert A, im Beispiel n = A = 0 zurückgesetzt.

Unterschreitet die Zeitdifferenz Δt den ersten Zeitgrenzwert T₁ so wird der Zählwert n um ein Inkrement hochgesetzt und zwischengespeichert. Überschreitet dieser Zählwert n aufgrund kurzfristig hintereinander erfolgender (Aus-)Schaltvorgänge einen für das jeweilige Schaltgerät festgelegten Höchstwert N so erfolgt mit Hilfe des Steuersignals S eine Überlastauslösung des Schaltgerätes, die dessen erneutes Zuschalten für eine vorgegebene Zeitdauer ΔT verhindert. Zugleich wird der Zählwert auf einen Zwischenwert n = Z gesetzt, der größer als der Anfangswert A ist, um nach Freigabe des Schaltgeräts bei Fortdauern des fehlerhaften Betriebszustandes eine schnellere Überlastauslösung zu bewirken. Dieser Zwischenwert ist beispielsweise 20% vom Höchstwert Z = 0,2N.

## Patentansprüche

1. Verfahren zum Schutz eines elektrischen Schaltgerätes (2) vor einer thermischen Überlast mit folgenden Verfahrensschritten:
a) Erfassen einer Zeitdifferenz (Δt) zwischen einem Ausschaltvorgang (on → off) und dem nächsten, zeitlich darauffolgenden Ausschaltvorgang (on → off),
b) Vergleichen der Zeitdifferenz (Δt) mit einem ersten Zeitgrenzwert (T₁),
c) Hochsetzen eines Zählwertes (n) um ein Inkrement, wenn der erste Zeitgrenzwert (T₁) unterschritten wird,
d) Vergleichen des Zählwertes (n) mit einem Höchstwert (N),
e) Auslösen des Schaltgerätes (2) für eine vorgegebene Zeitdauer (ΔT), wenn der Höchstwert (N) überschritten wird.

2. Verfahren nach Anspruch 1, mit folgenden weiteren Verfahrensschritten:
b1) Vergleichen der Zeitdifferenz (Δt) mit einem zweiten Zeitgrenzwert(T₁),
b2) Zurücksetzen des Zählwertes (n) auf einen Anfangswert (A), wenn der zweite Zeitgrenzwert (T₁) überschritten wird.

3. Verfahren nach Anspruch 1 oder 2, bei dem nach dem Auslösen des Schaltgerätes (2) der Zählwert (n) auf einen Zwischenwert (Z) gesetzt wird, der größer als der Anfangswert (A) ist.

4. Einrichtung zum Schutz eines elektrischen Schaltgerätes (2) vor einer thermischen Überlast, mit einem Aufnehmer zum Erfassen eines durch das Schaltgerät (2) fließenden Stroms (I) sowie einer Steuereinrichtung (8) zum Auslösen des Schaltgerätes (2) sowie einer im Steuergerät (8) implementierten Software zum Durchführen eines Verfahrens nach einem der Ansprüche 1 bis 3.
